# FASCICULE DE BREVET EUROPEEN

(11) **EP 2 352 663 B1**
(45) Date de publication et mention de la délivrance du brevet: **03.04.2013**
(21) Numéro de dépôt: 09748322.6
(22) Date de dépôt: 03.11.2009
(51) Int. Cl.: B60R 25/02

(54) **DISPOSITIF ANTIVOL POUR COLONNE DE DIRECTION**
DIEBSTAHLSCHUTZVORRICHTUNG FÜR EINE LENKSÄULE
ANTITHEFT DEVICE FOR STEERING COLUMN

(30) Priorité: 03.11.2008 FR 0806093
(43) Date de publication de la demande: 10.08.2011
(73) Titulaire: Valeo Sécurité Habitacle, 94046 Créteil Cedex (FR)
(72) Inventeur: MALTAVERNE, Frédéric, F-94042 Créteil (FR)
(74) Mandataire: Larger, Solène
(86) Numéro de dépôt international: PCT/EP2009/064559
(87) Numéro de publication internationale: WO 2010/060757

(56) Documents cités:
- FR-A- 2 909 953

## Description

La présente invention concerne un dispositif antivol pour colonne de direction de véhicule automobile.

L a présente invention se rapporte plus particulièrement à un dispositif antivol pour colonne de direction mettant en oeuvre un pêne mobile apte à être verrouillé en position lorsqu'un couple important est exercé sur un verrou du dispositif antivol.

A ce jour, la plupart des véhicules automobiles sont équipés de dispositif antivol permettant d'immobiliser en rotation la colonne de direction. Parmi les dispositifs antivols connus de l'état de la technique, nombre d'entre eux se distinguent par le fait qu'ils comprennent un pêne monté mobile dans le corps du dispositif ; le pêne est commandé en déplacement par des moyens de déplacement actionnés par un verrou rotatif ; ledit pêne pouvant prendre deux positions, à savoir une position de stockage dans laquelle la colonne de direction est libre en rotation et une position de blocage dans laquelle la colonne de direction est immobilisée.

Certains types de dispositif antivol permettent de verrouiller le pêne en position de blocage en cas de rupture du corps du dispositif antivol afin d'empêcher une quelconque rotation de la colonne de direction.

Habituellement, les antivols relatifs au blocage de la colonne de direction se composent de trois éléments principaux ; plus précisément, de tels dispositifs comportent notamment, un élément de condamnation, un élément de rappel et un élément déclencheur.

L'élément de condamnation possède deux positions, à savoir, une position active et une position passive.

La position passive de l'élément de condamnation n'interfère pas sur la liberté de rotation de la colonne de direction contrairement à la position active, laquelle bloque le pêne en position.

En outre, il est à noter que même si l'élément de rappel force de façon permanente l'élément de condamnation en position active, l'élément déclencheur permet de maintenir en position passive l'élément de condamnation.

Ainsi, lorsque le corps du dispositif antivol est brisé pour extraire le verrou, l'élément déclencheur actionné par le verrou ne maintient plus l'élément de condamnation en position passive et l'élément de rappel force ledit élément de condamnation en position active de blocage. De ce fait, ledit élément de blocage interdit une quelconque rotation de la colonne de direction.

En outre, la demande de brevet FR0655624 décrit un dispositif antivol à pêne verrouillable comportant un pêne monté mobile dans une première partie de l'antivol apte à immobiliser en rotation la colonne de direction, un verrou commandant le déplacement de moyen de déplacement du pêne ainsi que des moyens de condamnation à même d'immobiliser le pêne. La mise en oeuvre des moyens de condamnation est commandée par le déplacement d'un élément déclencheur maintenu en position par le verrou ; ainsi lorsque le verrou est arraché, l'élément déclencheur est également arraché et les moyens de condamnation sont forcés en position active par un élément de rappel.

Le document FR 2909 953 montre un dispositif anti-vol pour une colonne de direction de véhicule automobile selon l'art antérieur

Ce type de dispositif antivol présente toutefois l'inconvénient de disposer d'un niveau de protection encore insuffisant. Cela signifie en d'autres termes que les dispositifs antivol demeurent inopérants lors d'une attaque localisée consistant à forcer la rotation du verrou en lui appliquant un couple important avec un dispositif non adapté, par exemple un tournevis, pour décoder un codage paillettes spécifique audit verrou.

Dans ce contexte, l'invention vise à proposer un dispositif permettant de s'affranchir des problèmes précités en assurant un blocage de la colonne de direction de façon efficace et fiable, et plus particulièrement lorsqu'un couple important est exercé sur le verrou avec un dispositif ne correspondant pas au codage paillette relatif au verrou du dispositif antivol en question.

De même, l'invention offre également la possibilité de verrouiller en rotation la colonne de direction dans le cas d'une effraction du véhicule consistant à extraire ou briser le dispositif antivol.

Un tel dispositif permet également de protéger la colonne de direction du véhicule contre une éventuelle détérioration que peut générer le dispositif lorsqu'on lui applique un couple important.

A cette fin, l'objet de l'invention porte sur un dispositif antivol pour une colonne de direction de véhicule automobile comportant au moins :
- un corps ;
- un stator intermédiaire ;
- un rotor de type verrou ;
- un élément déclencheur d'un élément de condamnation ;
- un pêne de blocage apte à immobiliser en rotation la colonne de direction ;
   dispositif dans lequel,
- ledit corps comporte au moins un premier élément de guidage; et
- ledit stator intermédiaire comporte au moins un deuxième élément de guidage ;
le premier élément de guidage et le deuxième élément de guidage coopérant pour entraîner en translation ledit stator intermédiaire lorsqu'un effort est appliqué audit rotor et que ledit effort entraîne en rotation ledit stator intermédiaire.

Avantageusement, lors de sa translation ledit stator intermédiaire entraîne avec lui ledit élément déclencheur libérant de ce fait ledit élément de condamnation

L'élément de condamnation libéré assure le maintien d'un pêne dans sa position active, bloquant la colonne de direction.

Outre les caractéristiques principales qui viennent d'être mentionnées dans le paragraphe précédent, le dispositif selon l'invention peut présenter une ou plusieurs caractéristiques supplémentaires ci-dessous, considérées individuellement ou selon toutes les combinaisons techniquement possibles:
- ledit premier élément de guidage forme un élément extrudé et ledit deuxième élément de guidage forme une zone de guidage évidée ;
- ledit premier élément de guidage forme une zone de guidage évidée et ledit deuxième élément de guidage forme un élément extrudé ;
- ledit élément extrudé et/ou ladite zone de guidage évidée présentent chacun une première partie dont le périmètre est sensiblement de forme triangulaire assurant un guidage de translation lorsqu'un effort est appliqué audit rotor et que ledit effort entraîne en rotation ledit stator intermédiaire ;
- ledit élément extrudé et/ou ladite zone de guidage évidée présentent chacun une deuxième partie dont le périmètre est sensiblement de forme rectangulaire assurant une suppression de jeu entre ledit stator intermédiaire et ledit corps ;
- ladite deuxième partie de forme rectangulaire de l'élément extrudé est rompue lors d'un mouvement de rotation du stator intermédiaire ;
- ledit dispositif comprend un anneau de clippage comportant des plots ;
- ledit anneau de clippage comporte une cavité recevant une extrémité dudit élément déclencheur ;
- ledit élément déclencheur et ledit anneau de clippage forment avantageusement un seul élément;
- ledit anneau de clippage est solidaire en translation dudit rotor ;

En outre, l'invention porte également sur une colonne de direction de véhicule automobile comportant un dispositif antivol du type susmentionné.

D'autres caractéristiques et avantages de l'invention ressortiront clairement de la description qui en est donnée ci-dessous, à titre indicatif et nullement limitatif, de modes de réalisation faisant référence aux figures annexées ci-jointes sur lesquelles :
La figure 1 représente schématiquement de façon simplifiée un éclaté représentatif d'un exemple de dispositif antivol selon l'invention pour une colonne de direction d'un véhicule automobile.
La figure 2 représente schématiquement de façon simplifiée une vue en coupe d'un exemple de dispositif selon l'invention.

Pour des raisons de clarté, les mêmes éléments apparaissant sur différentes figures ont été désignés par des références similaires. De même, seuls les éléments utiles pour la compréhension de l'invention ont été représentés, et ceci sans respect de l'échelle et de manière schématique.

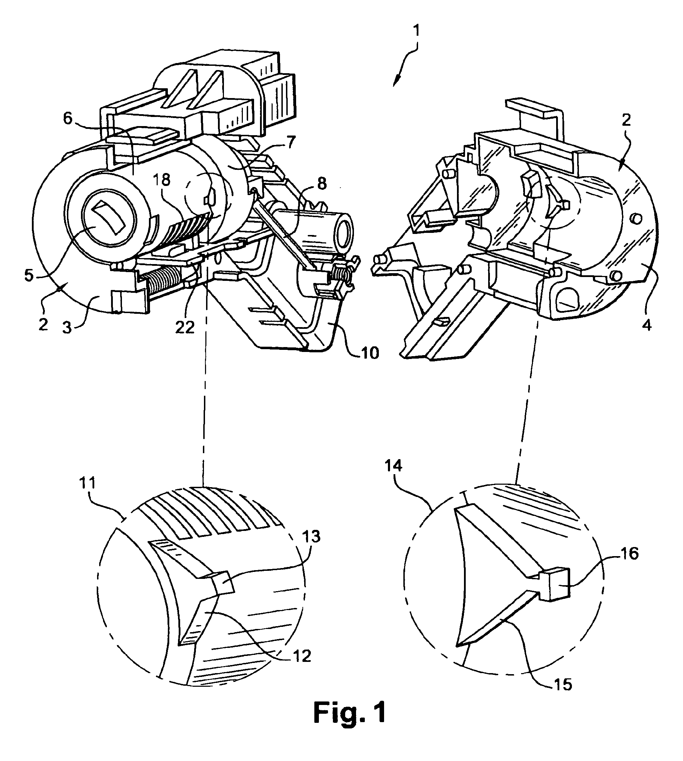

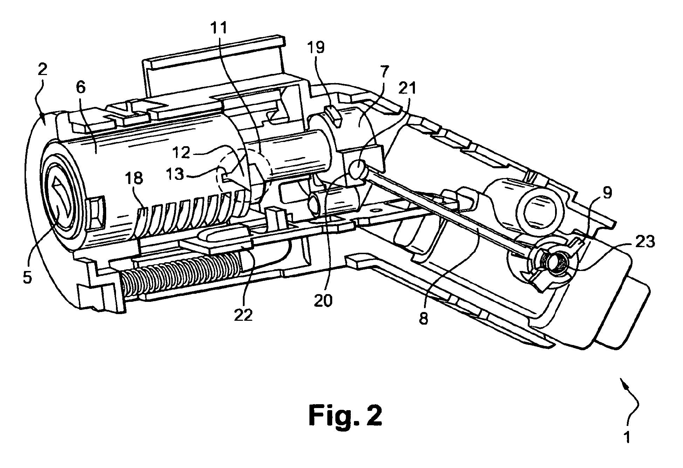

Les figures 1 et 2 représentent un dispositif antivol 1 adapté aux véhicules automobiles pour verrouiller et sécuriser l'utilisation d'une colonne de direction. Le dispositif antivol 1 comporte au moins un corps 2 formé par deux parties, d'une part, une partie gauche, constituant un boîtier primaire 3 dans laquelle différents éléments du dispositif sont assemblés et, d'autre part, une partie droite, constituant un boîtier secondaire 4. La partie droite 4 et la partie gauche 3 sont destinées à être assemblées pour former le corps 2.

Particulièrement, il est à noter que le corps 2 possède un premier élément de guidage 14 formant, dans l'exemple représenté, un élément extrudé. Ledit premier élément de guidage 14 est situé sur la surface interne dudit corps.

Plus précisément, ce premier élément de guidage 14 est composé d'au moins deux parties spécifiques, lesquelles assurent chacune au moins une fonction. On peut remarquer, par exemple figure 1, la présence d'une première partie 15 dont le périmètre est sensiblement de forme triangulaire ainsi qu'une deuxième partie 16 dont le périmètre est sensiblement de forme parallélépipédique, ou rectangulaire. La deuxième partie 16 de forme sensiblement rectangulaire est de type fusible, c'est à dire que cette deuxième partie se rompt dès lors qu'un effort important lui est appliqué.

En outre, dans ce corps 2 sont disposés au moins :
- un rotor 5, de type verrou, possédant un codage paillettes, présentant des paillettes 18 verrouillant l'accès du véhicule, lequel rotor 5 est disposé dans un stator intermédiaire 6 ;
- un anneau 7 de clippage de type fusible possédant des plots 19 à rupture programmée. Lesdits plots 19 étant conçus pour se rompre lorsqu'un effort important leur est appliqué. Cet anneau de clippage 7 permet non seulement de solidariser le rotor 5 de type verrou à un élément déclencheur 8 mais également de diminuer le frottement présent dans les dispositifs antivol de l'état de la technique ;
- des moyens de déplacement 22 d'un pêne 10 ;
- un moyen 9 de condamnation bloquant en position de blocage un pêne 10 lorsqu'il est activé, ce dernier ayant pour fonction d'autoriser ou d'interdire une quelconque rotation de la colonne de direction ;
- un élément de rappel 23 forçant le moyen 9 de condamnation en position active.

Le fonctionnement du dispositif antivol 1 conforme à l'invention est à présent décrit.

De manière générale, un véhicule automobile équipé du dispositif antivol 1 conforme à l'invention fonctionne avec une clé de déverrouillage permettant de décoder le codage paillettes spécifique au verrou. A cet effet, la clé est actionnée par un utilisateur en vue d'obtenir le déplacement du pêne 10 de verrouillage ; celui-ci passe alors d'une position de blocage à une position de stockage grâce aux moyens de déplacement 22 du pêne 10.

Le verrou 5 est avant tout chargé de commander les moyens de déplacement 22 du pêne 10. Ces derniers étant parfaitement connus tant au point de vue structurel que fonctionnel, ils ne seront pas décrits davantage ici.

Pour ce faire, le pêne 10 de verrouillage, monté dans le corps 2, possède une mobilité lui permettant :
- soit d'être stocké à l'intérieur du corps 2, ce positionnement autorisant alors la rotation de la colonne de direction ;
- soit une position de blocage dans laquelle il fait saillie à l'extrémité du corps 2 de manière à pouvoir coopérer classiquement par emboîtement avec un élément mobile de la colonne de direction ou directement avec la colonne de direction.

Dès lors que l'utilisateur ne possède pas la clé de déverrouillage appropriée pour décoder le codage paillettes en question, un couple est exercé sur le rotor 5. Ce couple entraîne alors en rotation le stator intermédiaire 6 par l'intermédiaire des paillettes 18.

Particulièrement, il est à noter que le stator intermédiaire 6 possède un deuxième élément de guidage 11 formant une zone de guidage évidée de périmètre sensiblement similaire à celui du premier élément de guidage 14 formant un élément extrudé situé sur le corps 2 du dispositif antivol selon l'invention. Ledit deuxième élément de guidage 11 est adapté pour coopérer ; avec ledit premier élément de guidage 14.

Plus précisément, ces éléments sont composés de deux parties spécifiques, lesquelles possèdent chacune une fonction déterminée.

Comme illustré figure 2, une première partie évidée 12 du deuxième élément de guidage 11 est adaptée pour transformer un mouvement de rotation en mouvement de translation, une telle caractéristique peut, par exemple, être assurée par une forme en triangle ou tout autre type de forme permettant de transformer un mouvement de rotation en mouvement de translation.

En outre, comme illustré figure 2, une deuxième partie évidée 13 du deuxième élément de guidage 11 permet de supprimer le jeu éventuel entre le stator intermédiaire 6 et le rotor 5.

Ainsi, lorsque le stator intermédiaire 6 est entraîné en rotation par le rotor 5, un effort est exercé sur les éléments de guidage 11 et 14.

Dans un premier temps, la deuxième partie 16 de type fusible du premier élément de guidage 14 formant un élément extrudé va se rompre dès lors que le stator intermédiaire 6 est entraîné en rotation ; puis, dans un second temps les premières parties 12 et 15 de forme sensiblement triangulaire, assurant un guidage en translation, vont permettre la transformation du mouvement de rotation en mouvement de translation entraînant, de fait, le rotor 5 et le stator intermédiaire 6 en translation vers l'arrière, c'est-à-dire vers la personne tentant de forcer le dispositif antivol 1.

Puis, dès lors que le rotor 5 est entraîné en translation, l'anneau de clippage 7 monté fixe en translation sur le rotor 5 est également entraîné en translation vers l'arrière.

Cet anneau de clippage 7 de type fusible comporte au moins une zone de type fusible conçue pour se rompre lorsqu'un certain effort lui est appliqué.

Cette zone de type fusible est formée par des plots 19 représentés de manière schématique figure 2. Ces plots 19 sont insérés dans le corps 2 du dispositif antivol 1. Ainsi, lorsque l'anneau de clippage 7 translate vers l'arrière, les plots 19 se cassent lors de leur évolution en translation dans le corps 2.

L'anneau de clippage 7 permet en outre, de rendre solidaire l'élément déclencheur 8 du rotor 5 par l'intermédiaire d'une forme spécifique formant une cavité 20 dans l'anneau de clippage 7. A cet effet, pour solidariser l'élément déclencheur 8 et l'anneau de clippage 7, l'élément déclencheur 8 est terminé par une extrémité 21 conçue pour se positionner au sein de la cavité 20 de l'anneau de clippage 7.

Par comparaison avec les dispositifs selon l'art antérieur, un tel anneau de clippage 7 est avantageux car il offre la possibilité de rendre solidaire l'élément déclencheur 8 du rotor 5 ; ainsi des usinages compliqués que nécessitent les rotors selon l'art antérieur ont été supprimés.

En sus, un tel agencement permet de diminuer les frottements que peut générer la rotation du rotor 5 dans le corps 2.

Comme illustré sur les figures 1 et 2, l'élément déclencheur 8 est concrètement formé par une pièce filiforme de type pige, laquelle peut être souple, semi-rigide ou rigide.

En outre, l'élément déclencheur 8 maintient en position passive l'élément de condamnation 9. Pour ce faire, l'élément déclencheur 8 est agencé à l'extrémité opposée de ladite extrémité 21 de façon que la mise en oeuvre des moyens de condamnation 9 est nécessairement commandée par le mouvement de l'élément déclencheur 8.

Ainsi, dès lors que les moyens de condamnation 9 sont libérés par l'élément déclencheur 8, par exemple suite à la translation vers l'arrière de l'anneau de clippage 7, des moyens de rappel forcent les moyens de condamnation 9 en position active de blocage. Ils peuvent être forcés en position active de blocage par un ressort, un élastomère ou tout autre type d'élément de rappel 23. Le pêne 10 est alors maintenu en position de blocage.

L'élément décrit permet d'illustrer une effraction exercée par un utilisateur sur un dispositif antivol 1 conforme à l'invention, cette tentative d'effraction consistant à générer un couple sur le rotor 5 en vue de débloquer la colonne de direction. Or un utilisateur peut également extraire le rotor 5 vers l'arrière, sans pour autant exercer de couple sur ce dernier. Une telle action libère les moyens de condamnation 9 puisque le rotor 5 est également entraîné en translation vers l'arrière.

Selon une variante de l'invention, le premier élément de guidage 14 formant un élément extrudé et le deuxième élément de guidage 11 formant une zone de guidage évidée sont inversés ; plus précisément, on réalise dans cette variante un premier élément de guidage formant un élément extrudé sur le stator intermédiaire 6 et, inversement, un deuxième élément de guidage formant une zone de guidage évidée sur le corps 2.

Il est entendu que le dispositif selon l'invention peut comporter plusieurs éléments de guidage de façon symétrique ou non.

On notera que le domaine d'application de l'invention est celui des véhicules automobiles. Le dispositif antivol pour colonne de direction selon l'invention peut s'appliquer à tout type de véhicule équipé d'au moins une colonne de direction en vue de protéger cette dernière et également de sécuriser l'utilisation du véhicule. De ce fait, l'invention est applicable notamment aux autobus, voitures, camions ou tout autre type de véhicule.

## Revendications

1. Dispositif antivol (1) pour une colonne de direction de véhicule automobile comportant au moins :
- un corps (2) ;
- un stator intermédiaire (6) ;
- un rotor (5) de type verrou ;
- un élément déclencheur (8) d'un élément de condamnation (9) ;
- un pêne de blocage (10) apte à immobiliser en rotation la colonne de direction ;
**caractérisé en ce que**,
- ledit corps (2) comporte au moins un premier élément de guidage (14); et
- ledit stator intermédiaire (6) comporte au moins un deuxième élément de guidage (11);
le premier élément de guidage (14) et le deuxième élément de guidage (11) coopérant pour entraîner en translation ledit stator intermédiaire (6) lorsqu'un effort est appliqué audit rotor (5) et que ledit effort entraîne en rotation ledit stator intermédiaire (6).

2. Dispositif antivol (1) selon la revendication précédente, **caractérisé en ce que**,
- le premier élément de guidage (14) forme un élément extrudé; et
- le deuxième élément de guidage (11) forme une zone de guidage évidée.

3. Dispositif antivol (1) selon la revendication 1, **caractérisé en ce que**
- le premier élément de guidage (14) forme une zone de guidage évidée; et
- le deuxième élément de guidage (11) forme un élément extrudé.

4. Dispositif antivol (1) selon l'une au moins des revendications 2 ou 3, **caractérisé en ce que** l'élément extrudé et/ou la zone de guidage évidée présentent chacun une première partie dont le périmètre est sensiblement de forme triangulaire assurant un guidage en translation lorsqu'un effort est appliqué audit rotor (5) et que ledit effort entraîne en rotation ledit stator intermédiaire (6).

5. Dispositif antivol (1) selon l'une au moins des revendications 2 à 4, **caractérisé en ce que** l'élément extrudé et/ou la zone de guidage évidée présentent chacun une deuxième partie dont le périmètre est sensiblement de forme rectangulaire assurant une suppression de jeu entre ledit stator intermédiaire (6) et ledit corps (2).

6. Dispositif antivol (1) selon la revendication précédente, **caractérisé en ce que** la deuxième partie de forme rectangulaire de l'élément extrudé est rompue lors d'un mouvement de rotation du stator intermédiaire (6).

7. Dispositif antivol (1) selon l'une au moins des revendications précédentes, **caractérisé en ce qu'**il comprend un anneau de clippage (7) comportant des plots (19).

8. Dispositif antivol (1) selon la revendication précédente **caractérisé en ce que** ledit anneau de clippage (7) comporte une cavité (20) recevant une extrémité (21) dudit élément déclencheur (8).

9. Dispositif antivol (1) selon l'une des revendications 7 ou 8, **caractérisé en ce que** ledit anneau de clippage (7) est solidaire en translation dudit rotor (5).

10. Colonne de direction de véhicule automobile, **caractérisée en ce qu'**elle comporte un dispositif antivol (1) selon l'une au moins des revendications précédentes.

## Claims

1. Antitheft device (1) for a motor vehicle steering column, comprising at least:
- a body (2);
- an intermediate stator (6);
- a rotor (5) of lock type;
- a trigger element (8) that triggers a deadlocking element (9);
- an immobilizing lock bolt (10) able to prevent the steering column from turning;
**characterized in that**
- the said body (2) comprises at least a first guide element (14); and
- the said intermediate stator (6) comprises at least a second guide element (11);
the first guide element (14) and the second guide element (11) collaborating to drive the translational movement of the said intermediate stator (6) when a force is applied to the said rotor (5) and the said force causes the said intermediate stator (6) to turn.

2. Antitheft device (1) according to the preceding claim, **characterized in that**:
- the first guide element (14) forms an extruded element; and
- the second guide element (11) forms a hollowed-out guide zone.

3. Antitheft device (1) according to Claim 1, **characterized in that**:
- the first guide element (14) forms a hollowed-out guide zone; and
- the second guide element (11) forms an extruded element.

4. Antitheft device (1) according to at least one of Claims 2 and 3, **characterized in that** the extruded element and/or the hollowed-out guide zone each have a first part the perimeter of which is substantially triangular in shape, providing translational guidance when a force is applied to the said rotor (5) and the said force causes the said intermediate stator (6) to turn.

5. Antitheft device (1) according to at least one of Claims 2 to 4, **characterized in that** the extruded element and/or the hollowed-out guide zone each have a second part the perimeter of which is substantially rectangular in shape, eliminating any play between the said intermediate stator (6) and the said body (2).

6. Antitheft device (1) according to the preceding claim, **characterized in that** the rectangle-shaped second part of the extruded element is ruptured in a turning movement of the intermediate stator (6).

7. Antitheft device (1) according to at least one of the preceding claims, **characterized in that** it comprises a clip ring (7) with lugs (19).

8. Antitheft device (1) according to the preceding claim, **characterized in that** the said clip ring (7) has a cavity (20) that accommodates one end (21) of the said trigger element (8).

9. Antitheft device (1) according to one of Claims 7 and 8, **characterized in that** the said clip ring (7) is as one with the said rotor (5) in terms of translation movement.

10. Motor vehicle steering column, **characterized in that** it comprises an antitheft device (1) according to at least one of the preceding claims.

## Patentansprüche

1. Diebstahlsicherung (1) für eine Lenksäule eines Kraftfahrzeugs, die mindestens aufweist:
- einen Körper (2);
- einen Zwischenstator (6);
- einen riegelartigen Rotor (5);
- ein Auslöseelement (8) eines Verriegelungselements (9);
- einen Riegelbolzen (10), der die Drehung der Lenksäule verhindern kann;
**dadurch gekennzeichnet, dass**
- der Körper (2) mindestens ein erstes Führungselement (14) aufweist; und
- der Zwischenstator (6) mindestens ein zweites Führungselement (11) aufweist;
wobei das erste Führungselement (14) und das zweite Führungselement (11) zusammenwirken, um den Zwischenstator (6) in Translationsbewegung anzutreiben, wenn eine Kraft auf den Rotor (5) angewendet wird und die Kraft den Zwischenstator (6) in Drehung versetzt.

2. Diebstahlsicherung (1) nach dem vorhergehenden Anspruch, **dadurch gekennzeichnet, dass**:
- das erste Führungselement (14) ein extrudiertes Element formt; und
- das zweite Führungselement (11) eine ausgesparte Führungszone formt.

3. Diebstahlsicherung (1) nach Anspruch 1, **dadurch gekennzeichnet, dass**
- das erste Führungselement (14) eine ausgesparte Führungszone formt; und
- das zweite Führungselement (11) ein extrudiertes Element formt.

4. Diebstahlsicherung (1) nach mindestens einem der Ansprüche 2 oder 3, **dadurch gekennzeichnet, dass** das extrudierte Element und/oder die ausgesparte Führungszone je einen ersten Teil aufweisen, dessen Umfang im Wesentlichen eine Dreiecksform hat, die eine Translationsführung gewährleistet, wenn eine Kraft auf den Rotor (5) angewendet wird und die Kraft den Zwischenstator (6) in Drehung versetzt.

5. Diebstahlsicherung (1) nach mindestens einem der Ansprüche 2 bis 4, **dadurch gekennzeichnet, dass** das extrudierte Element und/oder die ausgesparte Führungszone je einen zweiten Teil aufweisen, dessen Umfang im Wesentlichen eine Rechteckform hat, die eine Spielraumbeseitigung zwischen dem Zwischenstator (6) und dem Körper (2) gewährleistet.

6. Diebstahlsicherung (1) nach dem vorhergehenden Anspruch, **dadurch gekennzeichnet, dass** der zweite rechteckige Teil des extrudierten Elements bei einer Drehbewegung des Zwischenstators (6) abgebrochen wird.

7. Diebstahlsicherung (1) nach mindestens einem der vorhergehenden Ansprüche, **dadurch gekennzeichnet, dass** sie einen Einklinkring (7) enthält, der Klötzchen (19) aufweist.

8. Diebstahlsicherung (1) nach dem vorhergehenden Anspruch, **dadurch gekennzeichnet, dass** der Einklinkring (7) einen Hohlraum (20) aufweist, der ein Ende (21) des Auslöseelements (8) aufnimmt.

9. Diebstahlsicherung (1) nach einem der Ansprüche 7 oder 8, **dadurch gekennzeichnet, dass** der Einklinkring (7) in Translationsrichtung fest mit dem Rotor (5) verbunden ist.

10. Kraftfahrzeug-Lenksäule, **dadurch gekennzeichnet, dass** sie eine Diebstahlsicherung (1) nach mindestens einem der vorhergehenden Ansprüche aufweist.
